# EUROPEAN PATENT APPLICATION

(11) **EP 0 933 120 A1**
(43) Date of publication of application: **04.08.1999**
(21) Application number: 99400206.1
(22) Date of filing: 29.01.1999
(51) Int. Cl.: B01D 53/68, B01D 53/70, B01D 53/22

(54) **Exhaust gas treatment installation**

(30) Priority: 03.02.1998 JP 2230098
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Nozawa, Shigeyoshi, Tokyo 157-0073 (JP); Ibaraki, Yoshihiro, Tokyo 132-0000 (JP); Fukuoka, Muneyuki, Tuchiura-shi, Ibaraki-ken 300-0051 (JP)
(74) Representative: Vesin, Jacques

(57) **Abstract**

An exhaust gas treatment installation is provided which can effectively burn fluorine compound gases contained in an exhaust gas so that they are decomposed. According to the present invention, the exhaust gas treatment installation for treating an exhaust gas containing one or more fluorine compound gases and one or more carrier gases comprises a concentrator for enhancing the concentration of the fluorine compound gases in said exhaust gas; an oxygen-enriched air producer for producing oxygen-enriched air; and a combustor for receiving the exhaust gas, in which the concentration of said fluorine compound gases thereof has been enhanced by said concentrator. The fluorine compound gases in said exhaust gas are burned in the combustor by use of oxygen-enriched air produced by said oxygen-enriched air producer so that they are decomposed. By enhancing the concentration of fluorine compound gases, the efficiency of burning/decomposition in the combustor is greatly improved.

## Description

### BACKGROUND OF THE INVENTION

### Field of the Invention

The present invention relates to an exhaust gas treatment installation and method for decomposing perfluorocarbons such as CHF₃, SF₆, NF₃ and the like contained in an exhaust gas discharged from, for example, a semiconductor-manufacturing unit.

### Description of the Related Art

With the progress of the integration of manufacturing semiconductor devices, in recent years it has become popular to use fluorine compound gases, for example, perfluorocarbons such as CF₄, C₂F₆, C₃F₈ and C₄F₁₀, CHF₃, SF₆ and NF₃, in the CVD step, etching step or chamber-cleaning step of a semiconductor-manufacturing process. The fluorine compound gases mentioned above are generally introduced together with nitrogen gas into a semiconductor-manufacturing unit, and used in an etching or other step and then discharged. The exhaust gas therefrom still contains a very small amount of unreacted fluorine compound gases. Such unreacted fluorine compound gases were heretofore simply released to the atmosphere. As for at least the fluorine compound gases noted above, however, environmental concerns, e.g., Earth warming issues, urge the recovery and disposal of the gases. It is believed that the gases may contribute to the destruction of the ozone layer.

To date, a means has been proposed for concentrating and recovering fluorine compound gases in an exhaust gas so that they can be recycled for reuse (according to Japanese Patent Application Laid-open (KOKAI) No. 103,633/1997). A means has also been proposed for decomposing fluorine compound gases by burning the gases (according to Japanese Patent Application Laid-open (KOKAI) No. 108,532/1997). According to the recovery means described in Japanese Patent Application Laid-open (KOKAI) No. 103,633/1997 and the combustion-decomposition means described in the official gazette of Japanese Patent Application Laid-open (KOKAI) No. 108,532/1997, a certain result has been obtained, respectively. However, a plurality of semiconductor-manufacturing units are usually used in an installation, each a source of exhaust gas. Furthermore, an etching or chamber-cleaning step can be conducted at random, and hence the composition ratio and flow rate of an exhaust gas can vary considerably.

Thus, it has been difficult for the recovery means of the prior art to concentrate and recover fluorine compound gases to such a degree that they can be reused. In addition, the content of fluorine compound gases in an exhaust gas is very small. Therefore, it has also been difficult for the prior art to burn and decompose the fluorine compound gases effectively.

Due to the aforementioned problems, the present invention is intended to provide an exhaust gas treatment installation which can effectively decompose of fluorine compound gases contained in an exhaust gas, specifically by combusting the gases.

### SUMMARY OF THE INVENTION

In order to achieve the aforementioned objective, according to the present invention, an exhaust gas treatment installation for treating an exhaust gas containing one or more fluorine compound gases and one or more carrier gases is provided, which installation comprises a concentrator for enhancing the concentration of the fluorine compound gases in said exhaust gas, and a combustor for receiving the exhaust gas, in which the concentration of said fluorine compound gases thereof has been enhanced by said concentrator. The fluorine compound gases in said exhaust gas are burned by use of air so that they are decomposed. In a preferred embodiment, the fluorine compound gases shall comprise a gas selected from the group consisting of perfluorocarbons such as CF₄, C₂F₆, C₃F₈ and C₄F₁₀, CHF₃, SF₆, NF₃, or a mixture thereof.

In a case where the concentration of fluorine compound gases in an exhaust gas is small, i.e., a case where a large amount of carrier gas(es) is contained therein, the major part of the thermal energy in a combustor is absorbed into the carrier gases, and as a result, the decomposing efficiency of the fluorine compound gases is lower. According to the present invention, however, it is possible to burn and decompose fluorine compound gases at a higher efficiency because the concentration of such fluorine compound gases is enhanced before the exhaust gas is introduced into the combustor.

Although various types of concentrators can be used, it is preferred to use a membrane separator for removing carrier gas(es) in the exhaust gas. The use of a membrane separator has been found to be most effective in enhancing the concentration of fluorine compound gases.

The exhaust gas treatment installation according to the present invention preferably further comprises an oxygen-enriched air producer for producing oxygen-enriched air, whereby the oxygen-enriched air is used as air to be introduced into the combustor.

The combustor preferably comprises a treatment drum, a combustion air inlet pipe fixed at one end of said treatment drum for introducing air, e.g., said oxygen-enriched air, to the inside of said treatment drum as combustion air, a fuel gas inlet pipe disposed inside said combustion air inlet pipe for introducing a fuel gas to the inside of said treatment drum; an exhaust gas inlet pipe disposed inside said fuel gas inlet pipe for introducing the exhaust gas to the inside of said treatment drum; a flame pipe extending from the end of said combustion air inlet pipe on the air outlet side thereof to the vicinity of the other end of said treatment drum; a cooling air inlet means for introducing cooling air into a space between the side wall of said treatment drum and said flame pipe; and an outlet nozzle provided at the other end of said treatment drum for discharging the treated exhaust gas. When a mixture of fuel gas and oxygen-enriched air for combustion is ignited in such combustor, a flame runs through the flame pipe, whereby a high temperature state can be kept. Thus, the burning and decomposition of fluorine compound gases will be carried out with high efficiency.

Furthermore, the present invention is characterized in that a means for mixing said oxygen-enriched air into the exhaust gas coming from said concentrator is provided between said concentrator and said combustor. By virtue of the provision of such a mixing means, a flame will spread throughout the entirety of the exhaust gas.

In another embodiment, oxygen-enriched air from a nitrogen gas generator is used for the combustion chamber. In a semiconductor-manufacturing factory or the like, a nitrogen gas generator using air as a feed material is generally provided. In the case where nitrogen gas is generated by use of air as a feed material, and particularly in a case where nitrogen is taken out of air by separation, oxygen-enriched air is produced as a result. Although this oxygen-enriched air is generally released to the atmosphere in the prior art, according to the present invention, the nitrogen gas generator is used as a source of oxygen-enriched air for the combustion reaction, so that oxygen-enriched air coming from the nitrogen gas generator can be effectively utilized as air for the combustion of the exhaust gas.

In still another embodiment, there is provided a method for decomposing an exhaust gas containing perfluorocarbons. The method comprises first concentrating the perfluorocarbons in the gas, preferably by membrane separation, and then decomposing the exhaust gas in a combustor.

### BRIEF DESCRIPTION OF THE FIGURES OF THE DRAWING

Fig. 1 is a schematic view showing one embodiment of the exhaust gas treatment installation according to the present invention;
Fig. 2 is a schematic view showing the construction of a combustor suitable for the exhaust gas treatment installation according to the present invention; and
Fig. 3 is a graph showing the relation of the concentration of CF₄ gas in an exhaust gas with the decomposition rate thereof.

### DETAILED DESCRIPTION OF THE PREFERRED EMBODIMENTS

The preferred embodiments of the present invention will be better understood upon reference to the figures of the drawing. In the figures, the reference numerals refer to the following: 10a, 10b, 10c -- CVD units (a source of exhaust gas), 12 -- pretreatment unit, 14 -- concentrator, 16 --combustor, 18 -- exhaust blower, 20 -- wet scrubber, 22 -- nitrogen gas generator (an oxygen-enriched air producer).

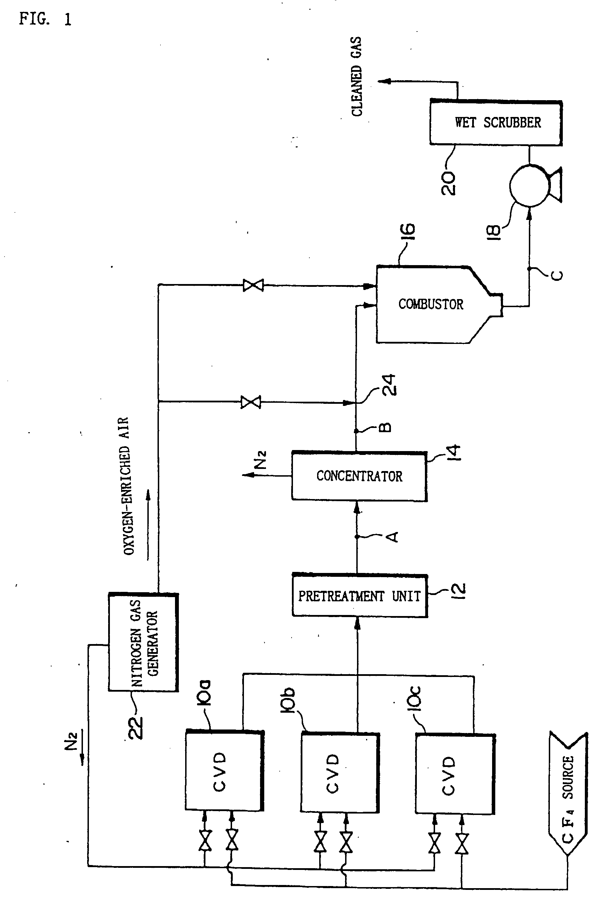

Fig. 1 shows a preferred embodiment of an exhaust gas treatment installation according to the present invention. A plurality of CVD units 10a, 10b, 10c are shown as part of a semiconductor-manufacturing factory, which is a source of exhaust gas. As the source of exhaust gas, there may be contemplated, for instance, etching units, apparatuses for manufacturing liquid crystal devices, or the like, it is not limited to these CVD units. In the following description, an exhaust gas shall comprise CF₄ gas and nitrogen gas (a carrier gas), as used in a CVD process, and contain impurities such as dust and silicon compounds of by-products.

The exhaust gas treatment installation of the illustrated embodiment comprises a pretreatment unit 12, a concentrator 14, a combustor 16, an exhaust blower 18 and a wet scrubber 20, disposed in series arrangement. This exhaust gas treatment installation utilizes oxygen-enriched air, and hence it uses as an oxygen-enriched air producer a nitrogen gas generator 22 placed on site of the semiconductor-manufacturing factory for supplying high purity nitrogen gas to the CVD units 10a, 10b, 10c.

To the gas inlet port of the pretreatment unit 12 are connected the exhaust ports of the respective CVD units 10a, 19b, 10c. If the exhaust blower 18 is operated, an exhaust gas from the plurality of said CVD units 10a, 10b, 10c will be introduced into the pretreatment unit 12 and then it will be treated by the exhaust gas treatment installation constructed in a one line arrangement. This pretreatment unit 12 serves to remove impurities in the exhaust gas which may damage the function of said concentrator 14, and it comprises, depending on the kinds of such impurities, a filter, a wet scrubber or dry scrubber or a combination thereof. As a matter of course, the pretreatment unit 12 is not indispensable, if the impurities are such that they do not damage the function of the concentrator 14 and can be removed by the concentrator 14.

The exhaust gas which has been freed of impurities by the pretreatment unit 12 is then introduced into the concentrator 14. The concentrator 14 serves to separate and remove nitrogen gas (carrier gas) from the exhaust gas so that the concentration of CF₄ gas is enhanced. Although all different types of concentrations are applicable as the concentrator 14, a membrane separation type concentrator, is preferable from the viewpoint of higher efficiency of concentration, lower cost and reliability. In particular, the concentrator (see Japanese Patent Application Laid-open (KOKAI) No. 103,633/1997) made by Air Liquide, in France, is effective because it can concentrate CF₄ gas to a concentration of from 15 to 99% in a case where an exhaust gas which is introduced therein still contains from 3,000 to 30, 000 ppm of CF₄ gas. In addition, the nitrogen gas separated by the concentrator 14 can be released to the atmosphere because it is harmless.

The exhaust gas in which CF₄ gas has been concentrated (this will be hereinafter called "concentrated exhaust gas") is then mixed, at the point of reference numeral 24 in Fig. 1, with oxygen-enriched air coming from the nitrogen gas generator 22, which is used as an oxygen-enriched air producer. The nitrogen gas generator 22 is usually placed in a semiconductor-manufacturing factory, as mentioned above, and it produces oxygen-enriched air as a by-product when generating high purity nitrogen gas from air. Oxygen-enriched air from the nitrogen gas generator 22 preferably has an oxygen concentration of about 25% or more.

After the concentrated exhaust gas has been mixed with the oxygen-enriched air, it is introduced into the combustor 16. Although all various types of combustors are contemplated as an applicable combustor 16, a combustor as described in Japanese Patent Application Laid-open (KOKAI) No. 108,532/1997, of common assignee, is preferred and is used in the illustrated embodiment.

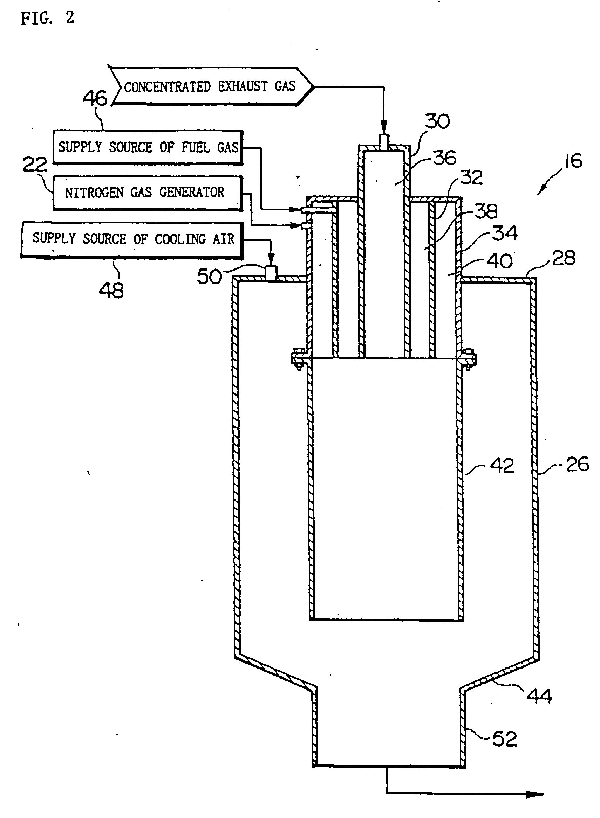

As shown in Fig. 2, this combustor 16 comprises a cylindrical treatment drum 26, and this treatment drum 26 is vertically placed, and in particular it is placed so that its axis faces in the vertical direction. On an upper plate 28 of the treatment drum 26 are secured an exhaust gas inlet pipe 30, a fuel gas inlet pipe 32 and a combustion air inlet pipe 34 coaxially disposed in order from the inside, wherein an inside space of the exhaust gas inlet pipe 30, an annular space between the exhaust gas inlet pipe 30 and the fuel gas inlet pipe 32 and an annular space between the fuel gas inlet pipe 32 and the combustion air inlet pipe 34 function as an exhaust gas inlet path, a fuel gas inlet path 38 and a combustion air inlet path 40, respectively. These inlet pipes 30, 32, 34 are run through the upper plate 28 of the treatment drum 26 and extend to a predetermined position in the upper inside part of the treatment drum 26. Further, a flame pipe 42 is connected to the lower end of said combustion air inlet pipe 34, and the lower end of said flame pipe 42 extends to the vicinity of a bottom plate 44 of the treatment drum 26.

The concentrated exhaust gas from the concentrator 14 is destined to come from the upper end of the exhaust gas inlet pipe 30 to the inside thereof. To the upper part of the fuel gas inlet pipe 32 is connected a supply source 46 for a fuel gas such as methane gas, natural gas, town gas, propane gas, hydrogen gas, butane gas, or a mixture of them. Furthermore, oxygen-enriched air is destined to come, as air for combustion, into the combustion air inlet pipe 34 from the upper part thereof, to which an oxygen-enriched air delivery port of the aforementioned nitrogen gas generator 22 is connected.

A cooling air supply source 48 is connected to a cooling air inlet port 50 provided on the outer peripheral portion of the upper plate 28 of the treatment drum 26. This cooling air is atmospheric or usual air. An outlet nozzle 52 is formed at the central portion of the bottom plate 44 of the treatment drum 26. Although not illustrated, in addition, an appropriate ignition means such as an ignition plug is provided on the outlet portion of the fuel gas inlet path 38.

If the concentrated exhaust gas is sent into the exhaust gas inlet pipe 30, and at the same time, a fuel gas and oxygen-enriched air for combustion are provided at a predetermined flow rate, respectively, and the ignition means is operated to burn the mixture of the fuel gas and combustion air in the aforementioned construction, its flame will be brought into contact with the concentrated exhaust gas discharged from the lower end of the exhaust gas inlet pipe 30 so that the decomposition of CF₄ gas in the concentrated exhaust gas is effected. The flame will run to the vicinity of the bottom plate 44 of the treatment drum 26 owing to the presence of the flame pipe 42. And further, since air for combustion is oxygen-enriched air, and this oxygen-enriched air is previously mixed into the concentrated exhaust gas, the flame will spread not only to the outer circumference of the concentrated exhaust gas, but also to the central part thereof. As a result, the contacting effect of the concentrated exhaust gas and the flame is enhanced, whereby even stable CF₄ gas can be decomposed. Upon the burning decomposition of CF₄ gas, in addition, carbon dioxide (CO₂) and hydrogen fluoride (HF) will be produced from the hydrogen and oxygen contained in the fuel gas and air.

From the supply source of cooling air 48, a large amount of cooling air is introduced into the annular space between the treatment drum 26 and the flame pipe 42 so as to be mixed, in the lower portion of the treatment drum 26, with the treated exhaust gas discharged after decomposition from the lower end of the flame pipe 42. Thus, the cooling of the exhaust gas, which has a high temperature in the flame pipe 42, will be carried out and at the same time a dilution of the exhaust gas will be effected because it is mixed with a large amount of air.

From the outlet nozzle 52, the treated gas in the combustor 16 is removed and sent into the wet scrubber 20 by means of the exhaust blower 18 (Fig. 1). HF gas produced by the burning decomposition of CF₄ gas is harmful, but it is removed by the wet scrubber 20, and hence the exhaust gas which is finally discharged to the atmosphere is clean.

Although the preferred embodiment of the present invention has been described in detail above, it goes without saying that the present invention is not limited to the aforementioned embodiment.

In the aforementioned embodiment, for instance, a gas substantially consisting only of CF₄ gas and nitrogen gas has been used as the exhaust gas. As for the exhaust gas to be treated in the present invention, however, it is a specific objective to treat a gas containing at least one additional and/or different fluorine compound gas, for example, of the perfluorocarbons such as C₂F₆, C₃F₈ and C₄F₁₀, CHF₃, SF₆ and NF₃, which may destroy the ozone layer.

Although the nitrogen gas generator 22 is used as the oxygen-enriched air producer in the aforementioned embodiment, an oxygen-enriched air producer for exclusive use of the treatment installation may be provided.

Furthermore, although the burning decomposition is more effective by previously mixing the oxygen-enriched air into the concentrated exhaust gas before the combustor 16, and then introducing the resulting mixture into the combustor, a sufficient effect can be obtained if the supply point of the oxygen-enriched air is limited to some other point.

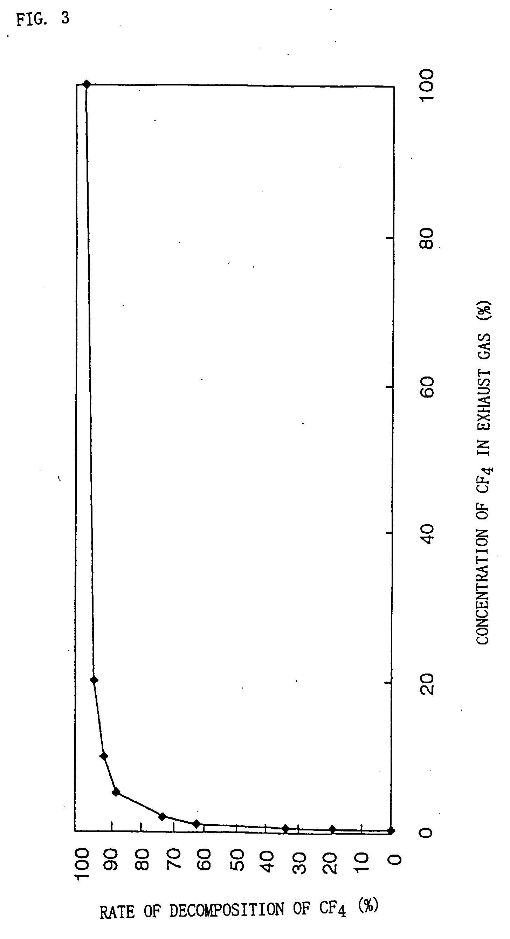

Fig. 3 is a graph showing the results obtained by carrying out, in practice, an experiment for demonstrating the influence the concentration of CF₄ gas to nitrogen gas has on the efficiency of the burning decomposition of CF₄ gas. In this experiment, the flow rate of the gas to be introduced was made constant, i.e. 30 slm, and the flow rates of nitrogen gas and CF₄ gas were varied. As the combustor, one having the structure shown in Fig, 2 was used. Oxygen-enriched air having an oxygen concentration of 28% was supplied at a flow rate of 440 slm before the combustor and supplied at a flow rate of 750 slm into the combustor. Propane gas was used as a fuel gas for the combustor.

As can be seen from Fig. 3, the rate of decomposition of CF₄ becomes more than 90% when the concentration of CF₄ gas is increased, and in particular when this concentration exceeds about 10%. On the contrary, the rate of decomposition decreases rapidly if the concentration of CF₄ gas is lowered to less than 10%. From this result, it can be seen that the efficiency of burning decomposition is remarkably improved by concentrating CF₄ gas to a higher predetermined concentration before the exhaust gas is introduced into the combustor. This result will be also obtained when considering other fluorine compound gases, such as those previously mentioned.

The following table exhibits the results obtained by simulating, via a computer, variances in the concentration of the respective fluorine compound gases in an exhaust gas, using an exhaust gas treatment installation constructed as shown in Fig. 1. Measuring points A, B and C are positions of the reference numerals A, B and C in Fig. 1, respectively. Only nitrogen gas was used as the carrier gases in an exhaust gas. Since the exhaust gas was diluted by a large amount of cooling air at the measuring point C, in addition, the following table exhibits a result obtained as cooling air was excepted.

**Table**

| Fluorine comp. in an exhaust gas | Concentration (ppm), Measuring point A | Concentration (ppm), Measuring point B | Concentration (ppm), Measuring point A | Ratio of fluorine comp. amount at C to that at B |
|---|---|---|---|---|
| CF₄ | 500 | 2.5 | 0.4 | 20% |
| CF₄ | 8,000 | 99.0 | <5.0 | less than 5% |
| C₂F₆ | 3,000 | 15.0 | 0.3 | 2% |
| C₂F₆ | 30,000 | 99.0 | <2.0 | less than 2% |
| SF₆ | 500 | 2.5 | 0.1 | 4% |
| SF₆ | 8,000 | 99.0 | <2.0 | less than 2% |
| | | | | |
| NF₃ | 500 | 1.2 | <0.01 | less than 1% |
| NF₃ | 5,000 | 75.0 | <0.75 | less than 1% |
| CHF₃ | 500 | 2.5 | <0.02 | less than 1% |
| CHF₃ | 8,000 | 99.0 | <1.0 | less than 1% |

Although the respective fluorine compound gases are directly released under a state at the measuring point A in the prior art, it is seen from the above table that the release amount of fluorine compound gases can be restrained below 5% by causing the exhaust gas to pass through the exhaust gas treatment installation according to the present invention, and this satisfies many environmental objectives, including the Japanese objective established at the Kyoko Conference held in 1997 for the prevention of Earth warming.

According to the other experiments using typical air in place of the oxygen-enriched air, it has been further seen that the rate of decomposition of 95% or more is obtained on fluorine compound gases other than CF₄. This exhibits that the efficiency of burning decomposition has been improved by virtue of concentrating the exhaust gas.

According to the present invention, as has been described above, it is possible to effectively burn and decompose fluorine compound gases such as CF₄ gas and other perfluorocarbons in an exhaust gas discharged, for example, from a semiconductor-manufacturing unit, while using a simple installation construction. The present invention therefore contributes much toward avoiding the danger of destroying the ozone layer and preventing Earth warming.

Various modifications, substitutions, omissions, and the like may be made by those skilled in the art without departing from the spirit of the present invention. Accordingly, it is intended that the scope of the present invention be limited solely by the following claims, including equivalents thereof.

## Claims

1. An exhaust gas treatment installation for treating an exhaust gas containing one or more fluorine compound gases and one or more carrier gases, which comprises:
a concentrator for enhancing the concentration of the one or more fluorine compound gases in said exhaust gas; and
a combustor for receiving the exhaust gas, in which the concentration of said one or more fluorine compound gases has been enhanced by said concentrator, and burning the fluorine compound gases in said exhaust gas by use of air so that they are decomposed.

2. The exhaust gas treatment installation according to claim 1, wherein said concentrator is a concentrator of the membrane separation type for removing the carrier gases in said exhaust gas through membrane separation, thereby enhancing the concentration of the fluorine compound gases.

3. The exhaust gas treatment installation according to claim 1 or 2, wherein said air is oxygen-enriched air.

4. The exhaust gas treatment installation according to one of claims 1 to 3, wherein the installation further comprises an oxygen-enriched air producer for producing said oxygen-enriched air.

5. The exhaust gas treatment installation according to one of claims 3 or 4, wherein the installation further comprises an oxygen-enriched air producer for producing said oxygen-enriched air.

6. The exhaust gas treatment installation according to one of claims 3 to 5, wherein the installation is constructed such that in a case where said carrier gases contain nitrogen gas generated by a nitrogen gas generator using air as a feed material, said nitrogen gas generator is used as said oxygen-enriched air producer.

7. The exhaust gas treatment installation according to one of claims 3 to 6, wherein said combustor comprises a treatment drum; a combustion air inlet pipe fixed at one end of said treatment drum for introducing said oxygen-enriched air to the inside of said treatment drum as combustion air; a fuel gas inlet pipe disposed inside said combustion air inlet pipe for introducing a fuel gas to the inside of said treatment drum; an exhaust gas inlet pipe disposed inside said fuel gas inlet pipe for introducing the exhaust gas to the inside of said treatment drum; a flame pipe extending from the end of said combustion air inlet pipe on the air outlet side thereof to the vicinity of the other end of said treatment drum; a cooling air inlet means for introducing cooling air into a space between the side wall of said treatment drum and said flame pipe; and an outlet nozzle provided at the other end of said treatment drum for discharging the treated exhaust gas.

8. The exhaust gas treatment installation according to one of claims 3 to 7, wherein a means for mixing said oxygen-enriched air into the exhaust gas coming from said concentrator is provided between said concentrator and said combustor.

9. The exhaust gas treatment installation according to one of claims 7 or 8, wherein a means for mixing said oxygen-enriched air into the exhaust gas coming from said concentrator is provided between said concentrator and said combustor.

10. The exhaust gas treatment installation according to one of claims 1 to 9, wherein said one or more fluorine compound gases comprises a gas selected from the group consisting of perfluorocarbons (PFC), CHF₃, SF₆, NF₃ and a mixture thereof.

11. A method for treating an exhaust gas containing one or more fluorine compound gases, which comprises the steps of:
increasing the concentration of the one or more fluorine compound gases in the exhaust gas to obtain a concentrated fluorine compound comprising gas; and
burning the fluorine compound comprising gas by use of an oxygen comprising gas such as air in order to decompose the fluorine compound comprising gases.

12. The method of claim 11, wherein the concentration of the one or more fluorine compound comprising gas is increased by the use of a membrane separator.

13. The method of claim 11 or 12, wherein the air is oxygen-enriched air.

14. The method of one of claims 11 to 13, wherein the air is oxygen-enriched air, and the oxygen-enriched air is mixed with the concentrated exhaust gas prior to the one or more fluorine compound gases being burned and hence decomposed.

15. The method of one of claims 12 to 14, wherein the air is oxygen-enriched air, and the oxygen-enriched air is mixed with the concentrated exhaust gas prior to the one or more fluorine compound gases being burned and hence decomposed.
